Europäisches Patentamt

(19) European Patent Office

Office européen des brevets

(11) EP 0 964 535 A1

(12) EUROPEAN PATENT APPLICATION

(43) Date of publication:
15.12.1999 Bulletin 1999/50

(51) Int. Cl.$^6$: H04B 10/08

(21) Application number: 99110163.5

(22) Date of filing: 25.05.1999

(84) Designated Contracting States:
AT BE CH CY DE DK ES FI FR GB GR IE IT LI LU
MC NL PT SE
Designated Extension States:
AL LT LV MK RO SI

(30) Priority: 12.06.1998 EP 98110820

(71) Applicant:
PIRELLI CAVI E SISTEMI S.p.A.
20126 Milano (IT)

(72) Inventors:
• Aina, Stefano
20126 Milan (IT)

• Bognanni, Gianpiero
20047 Brugherio (IT)
• Barozzi, Gianpaolo
20092 Cinisello B. (MI) (IT)
• Vanoli, Stefano
24049 Zingonia/Verdellino (BG) (IT)

(74) Representative:
Giannesi, Pier Giovanni et al
Pirelli S.p.A.
Industrial Property Dept.
Viale Sarca, 222
20126 Milano (IT)

(54) Telecommunications system of the wavelength division multiplexing type comprising an optical channel analyser

(57)     Optical telecommunications system, comprising a transmission station generating of transmission signals (1A, 1B) at a minimum of two predetermined wavelengths, a wavelength division multiplexer (3A, 3B) for sending the said transmission signals along an optical fibre line, and at least one power amplifier (5A, 5B), a station for receiving the said transmission signals, comprising at least one preamplifier (7A, 7B) of a device (8A, 8B) for the selective separation of the signals and a receiver (2A, 2B) of the said transmission signals, a plurality of stations (6A, 6B) for amplifying the optical signal, disposed along an optical fibre line which connects the transmission station to the receiving station, and a control unit (18) disposed within each line station. This system also comprises optical channel analysers (50), disposed down-stream from the power amplifiers (5A, 5B) at each signal amplification station, at the output of the line amplifiers (6A, 6B) and at the input of the preamplifiers (7A, 7B), and connected to the said control unit (18).

Fig. 1

EP 0 964 535 A1

## Description

The present invention relates to a system and a method of optical telecommunication, particularly suitable for wavelength division multiplexing transmission, or WDM, in which the various signals are monitored throughout the telecommunication path, in the transmitter, in the intermediate stations for amplifying the said signal, and in the receiver.

For wavelength division multiplexing, or WDM, transmission, it is necessary to send a plurality of transmission signals which are independent of each other along the same line, which consists of optical fibres, by multiplexing in the domain of the optical wavelengths; the transmitted signals may be either digital or analog, and they are distinguished from each other in that each of them has a specific wavelength, separate from those of the other signals.

The implementation of this WDM transmission requires that specific wavelengths of predetermined amplitude, termed "channels" in the following text, be assigned to each of the signals at different wavelengths. These channels, identified in the following text by a wavelength value, known as the central wavelength of the channel, have a certain spectral amplitude about the central wavelength value, which depends, in particular, on the characteristics of the laser which is the source of the signal and on the modulation imparted to it to associate a data element with the signal. Typical values of spectral amplitude of the signal emitted by a laser, in the absence of modulation, are around 10 MHz; in the presence of an external modulation, at 2.5 Gbit/s for example, the spectral amplitude is approximately 5 GHz.

In order to transmit signals in a large number of channels, making use of what is known as the third transmission window of the silica fibres and of the bandwidth of the optical amplifiers (for example from 1525 to 1565 nm or from 1540 to 1620, or again from 1525 to 1620), the wavelength separation between the channels is conveniently of the order of a number of nanometres or fractions of nanometres.

For the correct reception of these transmission signals, it is necessary to make a separation between the signals, to guide them to the corresponding users. Moreover, during their travel along the line the signals may undergo alterations due to external agents; these alterations may affect the power of the signal according to the wavelength. This is because signals whose wavelengths differ from each other may undergo alterations which differ from each other, with the result of obtaining, after demultiplexing, channels having a better transmission quality than others. It therefore becomes necessary to extract these signals in order to monitor and if necessary carry out an energy rebalancing on them at various points of the telecommunication line.

To extract these signals, use is made of optical filters with narrow bands, through which only the signal in the selected channel can pass, in order to ensure the absence of unwanted signals, which would constitute noise if superimposed on the selected signal. However, the use of these filters requires both a high stability of the wavelength of the transmitted signal and a high intrinsic stability of the central wavelength of the filters.

Additionally, if the number of channels is high, the pass band of the filters must be sufficiently narrow. Filters having a narrow pass band and high insulation between one channel and the next are expensive and difficult to obtain on the market, owing to problems of reproducibility on an industrial scale.

Patent application EP 0 629 885 proposes the use of two Bragg reflection filters connected in series in each channel selection filter. The pass band is obtained by suitable positioning of the two reflection peaks of the filters.

US patent 5.504.609 describes a demultiplexer for selecting a particular channel from the multiplexed signal and supplying it to the receiver. To carry out the channel selection, the multiplexed signal is sent to an optical filter through a coupler. The wavelength of the channel is reflected by the optical filter to the receiver through the coupler. The optical filter comprises a Bragg grating element which reflects the wavelength of the channel and transmits all the others.

Patent application EP 0 713 110 describes the use of a filter consisting of a fibre which incorporates a normally reflecting Bragg grating filter and two inclined Bragg grating filters. This fibre is connected to one port of an optical circulator.

US patent 5,039,201 describes a Fabry-Perot filter which comprises a pair of reflecting surfaces and a pair of optical elements whose refractive indices are different from each other, disposed in such a way as to form two resonant cavities tuned to the same frequency. The reflecting surfaces are disposed in such a way as to send a beam of light emerging from the first cavity to the second cavity, and vice versa. This produces a double filtering at the same frequency; this frequency can be regulated by modifying the characteristics of both cavities.

US patent 5,633,743 describes a device which comprises a Fabry-Perot filter used between two amplification stages. In one embodiment of the device, the optical signal passes for a first time through the filter, the output signal is back reflected by suitable reflection means and reinjected into the filter, using the same optical path. An optical circulator disposed at the input of the filter separates the signal entering the filter from that emerging after the back reflection. In this device, therefore, the optical signal is doubly filtered.

The applicant has observed that in these structures the phenomenon of back reflection of the optical signal by a filter, in other words the reflection of the part of the signal which is not transmitted beyond the filter, may give rise to problems of instability in the structure by adding a considerable quantity of noise to the filtered signal. This is because a phenomenon of successive reflections of the said part of the signal which causes noise (crosstalk) may develop between the filter and the means of back reflection.

The applicant has tackled the problem of making the identification of these signals less critical in a transmission system of the wavelength division multiplexing type, at various points of this system, by means of precise filtering.

It has been found, in particular, that by making the WDM signal pass at least twice through a unable filter tuned to each channel in sequence, each signal is extracted with high resolution and low noise. In this double pass, switching and delay means are provided which are capable of limiting the negative consequences of the previously described phenomenon of back reflection of the filter. Advantageously, if the double pass of the signal through the filter always takes place in the same direction, the effects of the preceding phenomenon we negligible.

In a first aspect, the present invention relates to an optical telecommunications system, comprising:

- at least one transmission station, comprising a generator of transmission signals at a minimum of two predetermined wavelengths, and a wavelength division multiplexer for sending the said transmission signals along an optical fibre line;
- at least one station for receiving the said transmission signals;
- the said optical fibre line connecting the said transmission and receiving stations;
- a station for amplifying the optical signal, disposed along the said line;
- a control unit associated with the said line station,
  characterized in that it has an optical channel analyser disposed down-stream from the said amplifying station and connected to the said control unit.

In particular, the said channel analyser comprises:

- a device for extracting part of the optical signal from the line at an input optical fibre;
- at least one selective filter tunable to the wavelengths of the channels which contain the signals;
- a circuit capable of causing at least a double pass of the optical signal through the said filter;
- a device for detecting the filtered optical signal;
- a circuit for reading the electrical signal originating from the said detecting device.

Preferably, the said circuit capable of causing at least a double pass of the optical signal through the said filter comprises:

- a first switch, operated by a driver circuit, which comprises a first port, connected selectively to one of two second ports;
- a second switch, operated by a driver circuit, which comprises a first port, connected selectively to one of two second ports;
- an isolator disposed between the said first port of the first switch and the said filter;
- at least one delay fibre disposed at the output of the said filter;
- one of the said second ports of the first switch being connected to the said input fibre and the other being connected to one of the two second ports of the second switch;
- the said first port of the second switch being connected to the said optical delay fibre;
- the said second port of the second switch being connected to the said detecting device.

Alternatively, the said circuit capable of causing at least a double pass of the optical signal through the said filter comprises:

- a switch, operated by a driver circuit, which comprises a first port, connected to the input of the said filter, connected selectively to one of two second ports, one of which is connected to the said input fibre while the other is connected to the said detecting device;
- at least one delay fibre disposed at the output of the said filter;
- a device for reflecting the optical beam emerging from the said delay fibre.

In particular, the said detecting device is a photodiode.

In particular, the said circuit for reading the electrical signal originating from the detecting device comprises a first amplification and current-voltage conversion stage, connected in series with a second voltage amplification stage, connected in series with a first port of a switch which is connected selectively to one of two second ports, each of which is connected to one input of a circuit that integrates the difference between the said two inputs.

According to a further aspect, the present invention relates to a channel analyser for wavelength division multiplexed transmission signals, comprising:

- an input for the said wavelength division multiplexed transmission signal;
- at least one selective filter tunable to the wavelength of the channels which contain the signals;
- an optical circuit capable of causing at least one double pass of the optical signal through the said filter;
- a device for detecting the filtered optical signal,
characterized in that the said optical circuit comprises at least one optical switch and a delay fibre associated with the said at least one switch.

Preferably, the said circuit capable of causing at least a double pass of the optical signal through the said filter comprises:

- a first switch, operated by a driver circuit, which comprises a first port, connected selectively to one of two second ports;
- a second switch, operated by a driver circuit, which comprises a first port, connected selectively to one of two second ports;
- an isolator disposed between the said first port of the first switch and the said filter;
- at least one delay fibre disposed at the output of the said filter;
- one of the said second ports of the first switch being connected to the said input fibre and the other being connected to one of the two second ports of the second switch;
- the said first port of the second switch being connected to the said optical delay fibre;
- the said second port of the second switch being connected to the said detecting device.

Alternatively, the said circuit capable of causing at least a double pass of the optical signal through the said filter comprises:

- a switch, operated by a driver circuit which comprises a first port, connected to the input of the said filter, connected selectively to one of two second ports, one of which is connected to the said input fibre while the other is connected to the said detecting device;
- at least one delay fibre disposed at the output of the said filter;
- a device for reflecting the optical beam emerging from the said delay fibre.

In particular, the said detecting device is a photodiode.
Preferably, the said circuit for reading the electrical signal originating from the detecting device comprises a first amplification and current-voltage conversion stage, connected in series with a second voltage amplification stage, connected in series with a first port of a switch which is connected selectively to one of two second ports, each of which is connected to one input of a circuit that integrates the difference between the said two inputs.
According to a further aspect, the present invention relates to a method for filtering an optical signal in a waveband, characterized in that it comprises the following stages:

- extracting a time sample of the said signal;
- filtering the said time sample of the signal for a first time by means of a filter;
- filtering the signal for a second time by means of the same filter;
- converting the said doubly filtered optical signal into a corresponding electrical signal.

According to a further aspect, the present invention relates to a method for monitoring channels for wavelength division multiplexed transmission signals, characterized in that it comprises the following stages:

- extracting from a line containing multiple-wavelength signals a time sample of the said signal;
- filtering the said time sample of the signal for a first time by means of a tunable filter;
- filtering the signal for a second time by means of the same filter;
- converting the said doubly filtered optical signal into a corresponding electrical signal;
- sending this electrical signal to a terminal for monitoring the parameters of the line.

In particular, the said method additionally comprises the stage of tuning the said filter to a different spectral region.
According to a further aspect, the present invention relates to an optical amplifier with gain control, comprising:

- at least one active fibre doped with a rare earth and capable of generating a light emission of a multiple-wavelength transmission signal in response to light supplied at a pumping wavelength;

- at least one pumping source of the said active fibre at the said pumping wavelength;
- a coupling device for sending the said light supply and the said transmission signal along the active fibre, characterized in that it comprises an optical channel analyser, disposed at the output of the said active fibre, communicating the information on the detected optical channels to a control unit which regulates the gain of the amplifier.

Preferably, the said control unit controls and regulates the power of the said pumping source.

Alternatively, the said control unit controls a variable attenuator disposed at the output of an amplification stage.

Further details may be obtained from the following description, with reference to the attached drawings in which are shown:

in Figure 1, a diagram of a telecommunications system of the wavelength division multiplexing type according to the present invention;

in Figure 2, a channel analyser according to one embodiment of the present invention;

in Figure 3, a channel analyser according to a further embodiment of the present invention;

in Figure 4, the graph of the operating signals of the switches of the device shown in Figure 3;

in Figure 5, a driver suitable for use in the present invention for generating the signals shown in Figure 4;

in Figure 6, a possible reading circuit for the channel analyser according to the present invention;

in Figure 7, an apparatus for the experimental tests which comprises the channel analyser according to the present invention;

in Figure 8, the response of the structure shown in Figure 3, in the cases of single and double pass with a white spectrum, in other words with a constant intensity in wavelength;

in Figures 9a-9e, the spectra in decibels measured for five pairs of signals separated by different wavelength intervals in the WDM signal in the case of a single pass and in the case of filtering with the device according to the present invention.

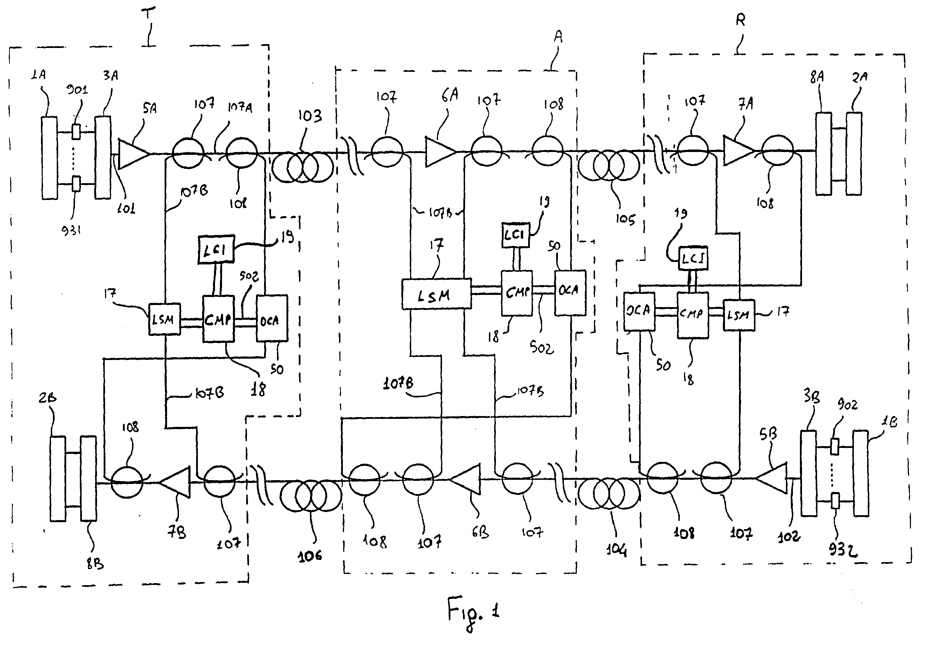

Figure 1 shows schematically a bidirectional optical telecommunications system of the wavelength division multiplexing type, comprising two terminal stations T and R, each of which includes a corresponding transmission station 1A, 1B and a corresponding receiving station 2A, 2B.

In particular, in the version shown in Figure 1, the transmission station 1A comprises 16 transmitters of optical signals having a first set of wavelengths, indicated by odd-numbered indices, $\lambda_1$, ..., $\lambda_{31}$ (for example, those included in the 1530-1565 nm waveband), and the transmission station 1B comprises 16 transmitters of optical signals having a second set of wavelengths, indicated by even-numbered indices, $\lambda_2$, ..., $\lambda_{32}$.

The number of independent wavelengths used for the signals of each transmission station is not limited to the value of 16 indicated in the described device, and may have a different value. The number of wavelengths, corresponding to the number optical channels which can be used for transmission in each direction, may be selected according to the characteristics of the telecommunications system.

The optical transmitters included in the transmission stations 1A, 1B are transmitters with direct modulation or external modulation, according to the requirements of the system; in particular, these requirements are related to the chromatic dispersion of the optical fibres of the system, to their wavelength and to the specified transmission speed.

The outputs of each of the transmitters of the transmission stations 1A, 1B are connected to the multiplexers 3A, 3B respectively, each of which combines the corresponding optical signals towards a single output, in other words to the optical fibres 101 and 102 respectively, which are connected to the inputs of optical power amplifiers 5A, 5B respectively.

In general, the multiplexers 3A and 3B are passive optical devices, by means of which the optical signals transmitted along corresponding optical fibres are superimposed in a single fibre; devices of this kind consist, for example, of couplers of the fused fibre, planar optics, micro-optics or similar types.

By way of example, a suitable multiplexer is that marketed under the symbol SMTC2D00PH210 by E-TEK DYNAMICS INC., 1885 Lundy Ave., San Jose, CA (USA).

The power amplifiers 5A, 5B raise the level of the signals generated by the transmission stations 1A, 1B to a sufficient value for them to travel along the next section of optical fibre present before the receiving station or amplifying means which maintain a sufficient power level at the end to provide the required transmission quality.

For the purposes of the present invention, and for the application described above, optical fibre amplifiers of the commercial type, having an input power of -13.5 to -3.5 dBm and an output power of at least 13 dBm, for example, are suitable for use as the power amplifiers 5A and 5B.

An example of a suitable model is the TPA/E-MW, marketed by the applicant, and making use of an erbium-doped active optical fibre.

The power amplifiers 5A and 5B are then connected to an optical line section 103 and an optical line section 104 respectively, normally consisting of a single-mode optical fibre, of the step index type, inserted in a suitable optical cable with a length of a few tens (or hundreds) of kilometres; for example, approximately 100 kilometres with the amplification means described below and the indicated power levels.

At the end of each of the said optical line sections 103 and 104 there are one or more stations A for amplifying the optical signal, each of these stations comprising line amplifiers 6A and 6B, capable of receiving the signals which are attenuated during their travel along the fibre, and of amplifying them to a sufficient level to supply them to a plurality of subsequent optical line sections 105 and 106 respectively, thus covering the total transmission distance required to reach a preamplifier 7A and a preamplifier 7B respectively or a further amplification station A. In the context of the present invention, the term "preamplifier" signifies an amplifier designed to compensate for the losses of the last optical line section and the insertion losses of the subsequent demultiplexing stages 8A or 8B, in such a way that the signal at the input of the receiving stations has a suitable power level for the sensitivity of the device. The preamplifier also has the function of limiting to dynamics of the signals, by reducing the variation of the power level of the signals at the input of the receiver with respect to the variation of the power level of the signals received from the transmission line. One type of preamplifier suitable for use as a preamplifier 7A or 7B is, for example, an optical amplifier of the commercially available erbium-doped active optical fibre type, having a total input power of -20 to -9 dBm and an output power of 0-6 dBm.

A suitable model is, for example, the RPA/E-MW, marketed by the applicant.

The multiplexed optical signals in two input ports connected to the outputs of the preamplifiers 7A and 7B arrive at the demultiplexers 8A, 8B respectively, which are capable of separating into 16 output optical fibres, according to the corresponding wavelengths, 16 signals which will be sent to the corresponding 16 receivers included in the receiving stations 2A and 2B. A demultiplexer suitable for use in to present transmission system is, for example, the demultiplexer described in patent application No. ITAMI970054 in the name of the present applicant.

If to optical signals to be transmitted are generated by sources of signals which have intrinsic transmission characteristics (such as wavelength, type of modulation, power) different from those specified for the connection described, each transmission station 1A, 1B comprises interfacing units, 901, ..., 931 and 902, ..., 932 respectively, capable of receiving the optical signals generated by the transmission stations 1A, 1B, of detecting them, of regenerating them with new characteristics suitable for the transmission system, and of sending them to the multiplexers 3A, 3B.

In particular, the said interfacing units generate the corresponding working optical signals mentioned previously, having wavelengths $\lambda_1$, ..., $\lambda_{31}$ and $\lambda_2$, ..., $\lambda_{32}$ respectively which are suitable for the requirements of the system, as described below.

US Patent 5.267.073 held by the present Applicant describes interfacing units comprising, in particular, a transmission adapter capable of converting an input optical signal into a form suitable for the optical transmission line, and a receiving adapter, capable of reconverting the transmitted signal into a form suitable for a receiving unit.

For use in the system, the transmission adapter preferably comprises an externally modulated laser as the source for the generation of the output signal.

As an alternative to the use of interfacing units 901, ..., 931 and 902, ..., 932, one or more of the laser transmitters included in the transmission stations 1A, 1B may be laser transmitters operating at the predetermined wavelengths, for example transmitters using DFB lasers at the wavelengths $\lambda_1$, $\lambda_3$, ..., $\lambda_{31}$ and $\lambda_2$, $\lambda_4$,..., $\lambda_{32}$ respectively. Preferably, the wavelength of each of the sources used for the signals is stable within +/- 0.25 nm, more preferably within +/- 0.1 nm.

The present optical fibre telecommunications system provides, in addition to the channels intended for the communication signals and made available to the users, an independent channel capable of transmitting service signals. A system comprising channels intended for service signals is described in US Patent 5113459 in the name of the applicant.

These service signals may be of various types, for example signals for the alarm system, for monitoring or controlling equipment disposed along the line, such as repeaters or amplifiers, or communications between the maintenance personnel operating at one point of the line and an intermediate or terminal station of the line.

The amplifiers 5A, 6A, 7A and 5B, 6B, 7B, and any further line amplifiers not shown in Figure 1, are generally designed to receive and/or transmit control signals, for example those for the activation or verification of the operation of some of their components, and are also subject to maintenance operations for which an operator may need to communicate with the terminal stations T or R, for transmission and reception, or with the other intermediate amplification stations A.

In these cases, therefore, it is necessary to introduce into the communication line further signals, which can be received and transmitted at any intermediate station or at the terminal stations. These service signals are transmitted at a wavelength significantly different from the communication wavelength, in other words one that can be separated by means of a suitable dichroic coupler.

Additionally, these amplifiers, whose internal configuration is not illustrated, generally comprise at least one active fibre doped with a rare earth, capable of generating an amplification of the multiple-wavelength transmission signal in response to a supply of light radiation at a pumping wavelength.

This pumping wavelength is different from that of the transmission signals and is produced by at least one pumping source of the said active fibre, having an optical power controllable by a control unit 18 of the station A, T or R within which the amplifier is located; by way of example, this source may be a laser. The amplifier also comprises a coupling device for sending the said pumping radiation and the said transmission signal along the active fibre.

The control unit 18, also called a CMP (Control and Monitoring Processor), comprises a unit for the control and monitoring of the station parameters, such as the previously mentioned power of the pumping source, and also alarms, state signals, signals which cause actions, etc., monitors the state of the station on the basis of the parameters, and transfers these data to a unit of the LCI (Local Craft Interface) 19, which controls the monitoring of the individual station by an operator responsible for the maintenance of the station, or communicates, through a connection unit 17 which is also called an LSM (Line Service Module), with the other stations of the network by means of which the said service signals are propagated along the line.

For this purpose, two dichroic couplers 107 are present, as shown in Figure 1, at the input and output of each optical line amplifier 6A and 6B. The dichroic couplers 107 are devices capable of receiving at a common input the communication signals and the service signals, which have different wavelengths multiplexed in the same fibre, and of separating at the output, into two output fibres 107a and 107b respectively, the communication signals at one or more wavelengths and the service signals at a different wavelength. Examples of dichroic couplers suitable for use in the present invention are, for example, fused fibre couplers, interference couplers, and couplers using Bragg grating filters, for example in combination with an optical circulator or an optical power divider.

These couplers are also used to carry out the opposite function, in other words to send along a single output fibre the communication signals and the service signals which have been separately injected into the fibres 107a and 107b.

Similar dichroic couplers are present at the terminal stations at the outputs of the power amplifiers 5A and 5B and at the inputs of the preamplifiers 7A and 7B. Each dichroic coupler 107 is connected, by the corresponding fibre 107b carrying the service signals, to the corresponding connection unit 17. By means of these units, the optical service signals leaving the coupler 107 are received and converted into corresponding output electrical signals, and/or electrical input signals are converted into optical signals at the service wavelength and injected into the input of the fibre 107b of each dichroic coupler 107 to be multiplexed along the line.

In this way, an optical signal, at 1480 nm or at another wavelength used to transmit service signals, extracted from the optical line of the dichroic coupler 107, is convened into a corresponding electrical signal, which can be used for the applications specified for it, such as telephonic service communications of the maintenance personnel or monitoring of the line amplifier, or for further control or monitoring operations; similarly, control signals or telephonic service communications can be sent along the output fibre from the line amplifiers to reach other destinations.

To enable the service signal to reach amplifiers or terminal stations located at a great distance from the place of transmission of the signal, along a fibre having a plurality of optical amplifiers, each connecting unit 17 may comprise a corresponding electronic service amplifier, so that the service signal can be suitably amplified before being sent along the next section of optical fibre, to the destination station or to a new optical amplifier.

In this way, the service signal is amplified autonomously, in each optical line amplifier, and can therefore cover the whole of the required distance, reaching the destination at a level sufficient for the objects assigned to it.

Although the injection and extraction of the service signals into and from the optical line is conveniently executed at the terminal stations of the line and in the line amplifiers, as described previously, dichroic couplers and corresponding stations for receiving and transmitting service signals may also be introduced at any other point of the optical fibre line where they are required.

The present embodiment of a WDM optical fibre communication system also provides for the connection of an optical channel analyser 50, also shown as OCA (Optical Channel Analyser), which is a unit capable of monitoring, along the optical line, at the intermediate amplification stations A or near each terminal station T or R, the various characteristic values of the optical signal, such as the power level of the signal, the signal to noise ratio, the wavelength of the transmission channel and the number of channels which are propagated along the line.

The optical channel analyser 50 is a modular component which is preferably connected along the line in the optical signal amplification stations A, and if necessary in the transmitter and in the receiver, and is capable of monitoring the signals which appear at each of these stations.

This device is advantageously connected in the transmitter after the power amplifiers 5A and 5B, and at the output of the preamplifiers 7A and 7B in the receiver.

Additionally, this device is preferably connected in the amplification stations at the outputs of the line amplifiers 6A and 6B in the case in which the said amplification station on the line has an optical signal extraction and injection device, which causes a change in the information travelling along the various channels. An optical channel analyser 50, of the type described, advantageously enables this variation to be monitored.

Additionally, although the analysis of all the channels is conveniently carried out at the points described above, these channels may be extracted at any other point along the optical fibre line where this may be necessary.

As illustrated in Figure 1, each OCA is connected optically at the specified points between extraction devices 108. They are capable of extracting part of the communication signal and are disposed, for example, in series with the dichroic couplers 107 disposed at the outputs of the power amplifiers 5A and 5B, in series with the directional couplers 107 connected at the outputs of the line amplifiers 6A and 6B and at the output of each line amplifier not shown in Figure 1. Further extraction devices 108 are disposed at the outputs of the preamplifiers 7A and 7B.

An extraction device 108 suitable for the purpose described is a directional coupler which comprises two output optical fibres between which the communication signal received at the input is distributed. The power percentage of the extracted signal is, for example, in the range from 0.1% to 0.5%, and is preferably approximately 0.5%.

Each optical channel analyser OCA described in the present embodiment of the invention is provided with a connection 502 such as a digital bus (according to the ethernet™ standard, for example) which transmits information relating to the communication channels to and/or from the control unit 18. Additionally, each OCA module is preferably capable of receiving information from signals which travel along the line in both directions. The directional couplers are therefore disposed at each intermediate station on both sections of the bidirectional line.

The data received by the analyser 50 are made available in the same station by the control unit 18. The said data, or some of them, are sent along the network by the connection unit 17 in such a way that they are made available to the equipment for the control and analysis of the whole network.

A telecommunications line as described comprises a channel analyser which makes it possible to measure the parameters cited previously for each transmission channel with high accuracy. In particular, an example of an application specified for the analyser is that of counting the number of signals present in the different output channels of the station, and of intervening in the regulation of the gain of the amplifier of the station, for example by communicating with the unit which controls the pumping source of the amplifier, according to the number of signals which this station is retransmitting to the next station or to the receiver. Alternatively, the power of the amplifiers may be controlled by the control unit 18 of the station, which controls a variable attenuator disposed at the output of the station, in such a way as to adjust the power of the channels.

A further example of the application of the channel analyser in a transmitter is that of monitoring the power level of all the channels which make up the WDM signal to be sent along the line, and then transmitting the data to the control unit, which rebalances the channels by establishing the same power level for all the channels.

In general, therefore, within each amplification station of a telecommunications line the control unit 18 receives the data on the state of the system from the analyser 50, establishes the new configuration of the station and determines the corrective actions which are required.

Additionally, in a transmitter the monitoring of the output signals from it and the consequent transmission of these parameters to the control unit 18 may result in an independent action in each channel by the transmitter to give rise to a balancing between the channels according to the characteristics required by the network.

Advantageously, these data may be transmitted, at the specific request of the controller of the whole network and through the aforementioned service channel, to any of the other stations of the network.

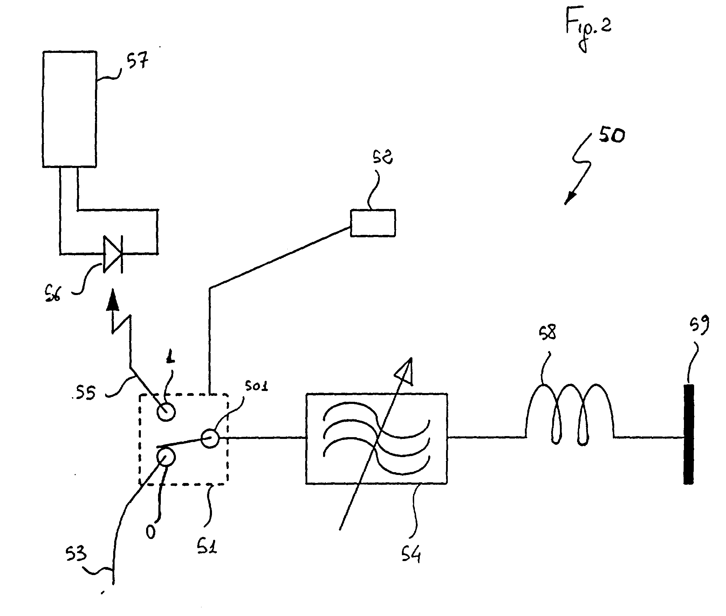

Figure 2 shows a first embodiment of a channel analyser 50.

The channel analyser comprises an optical switch 51 with a first port 501 connected selectively to one of two second ports, namely 1 or 0. The selection, of the electrical type for example, is managed by a driver circuit 52.

This device 50 also comprises an input optical fibre 53 connected to one of the second ports 0 of the optical switch 51, and a tunable filter 54 whose input port is connected optically to the port 501 of the switch. The remaining second port 1 of the optical switch 51 is connected through an output fibre 55 to a detecting device 56, for example a photodiode associated with a reading device 57. The output port of the filter 54 is connected through a delay fibre 58 to a mirror 59.

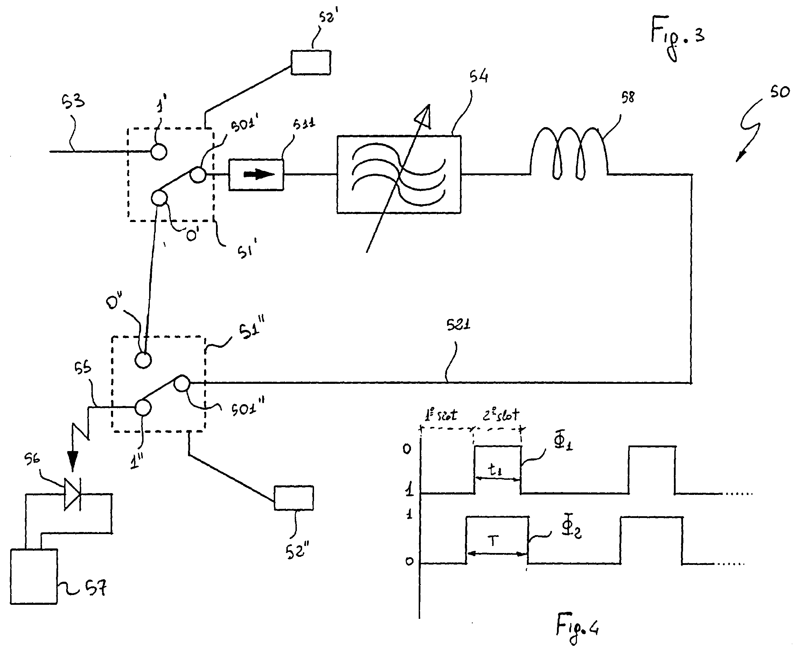

The operation of the device shown in Figure 3 is as follows.

An optical signal present at the input optical fibre 53 is sent, through the switch 51, which has its port 0 connected to the port 501, to the filter 54 in which it undergoes a first filtering. The part of the signal back reflected from the filter, in other words what is known as the back reflection, containing the reflected signal at all the wavelengths including the wavelength which is to be analysed (of which a small proportion, which in any case is negligible, is present), is reinjected into the input fibre 53. Consequently, this back reflection, which does not carry the significant signal contained in the channel which is to be analysed at this instant, does not reach the detecting device 56. The switch 51 is then switched, and connects the port 501 to the port 1 after a period t following the preceding switch. A signal pulse having the duration t is then sampled at the port 501 of the switch 51.

The said signal pulse reaches the filter 54; it passes through the delay line 58 over a period $\tau$; it is reflected back into the delay line 58 by the mirror 59; and it is then filtered for a second time at the same wavelength by the filter 54. The said delay line 58 and the driver circuit 52 are designed in such a way that the signal pulse passing through them, determined by the switching time of the switch 51, is present at the port 501 when the switch 51 has connected this port to the port 1. From this port, the doubly filtered signal pulse reaches the photodiode 56 and then, in electrical form, the reading circuit 57.

In a successive instant, after the signal pulse has passed completely through the port 1, the switch 51 returns to the initial condition so that a second pulse can be analysed. The operation of the device is repeated in an identical way for successive signal pulses.

The optical switch 51 is a switch which must principally have the characteristic of maintaining a high degree of optical isolation at the unconnected port, to ensure that the data received from the reading device are reliable. The switching speed of the switch is also an important parameter, since the length of the delay fibre is determined according to this speed, as well as according to the length of the said signal pulse.

A mechano-optical switch ensures a high degree of isolation, but at present the available switches provide a switching frequency of not more than 1 kHz, the corresponding length of the delay fibre being 120 km. This length of the delay fibre is a critical parameter for this type of switch.

An electro-optical switch provides a lower degree of isolation than a mechano-optical switch, but achieves markedly higher switching speeds of at least 100 kHz, corresponding to a delay fibre length of approximately 1 km.

The photodiode is, for example, an InGaAs PIN photodiode such as the ETX75 FJ SLR model, marketed by EPITAXX OPTOELECTRONICS DEVICES, 7 Graphics Drive, West Trenton, NJ, USA.

A suitable filter for use in the analyser 50 is a filter which causes the transmission of the wavelength which is to be analysed. The invention makes it possible to use filters with high back reflection in all or some of the other wavelengths which make up the WDM signal. However, it is also possible to use filters having a relatively low back reflection, where these are available.

A tunable filter suitable for the indicated application is, for example, a Fabry-Perot filter, such as the FFP-TF model, marketed by MICRON-OPTICS, Inc., 2801 Buford Hwy, Suite 140, Atlanta, Georgia, US, or the MF 200 model marketed by QUEENSGATE INSTRUMENTS Ltd., Silkwood Park, Ascot, Berkshire SL5 7PW, UK.

Alternatively, this filter may comprise a set of filtering elements (such as Bragg gratings in fibre or interference filters) and/or other optical components (such as optical circulators or couplers) which in combination provide the desired filtering function.

The applicant notes that in this embodiment there is a double pass through the Fabry-Perot filter which increases its spectral selectivity. Additionally, the optical signal is modulated not as a result of the coefficient of reflection of the mirror 59 but by means of the said switch 51, which enables the photodiode 56 not to receive reflected power except during the two switching instants in which the switch resembles a coupler with a rapidly variable coupling factor.

For Fabry-Perot filters there may be a variation with time of the wavelength on which is centred the Airy function which represents its transmission function. Between two successive signal pulses, therefore, the filter may be centred on slightly different wavelengths. However, if the frequency of the modulation introduced by the switch is sufficiently high, this difference may be considered negligible for the purposes of the invention.

In particular, if $S(\lambda)$ is taken to be the spectrum of the pulse at the input of the device shown in Figure 2, and, as stated previously, $A(\lambda)$ is the transmission function of the Fabry-Perot filter and $B(\lambda)$ is that for the back reflection of the filter, a single pulse at the input of a device as shown in Figure 2 generates:

- a first contribution to the photodiode, equal to $A^2(\lambda)S(\lambda)$,
- in the next time interval, a second contribution to the photodiode, due to the pulse filtered for a first time and then reflected by the mirror 59 and filtered again, in other words equal to $A^2(\lambda)B(\lambda)S(\lambda)$;
  the contribution $B(\lambda)S(\lambda)$ due to the back reflection does not reach the photodiode, since it is generated by the port 1 of the switch 51 which is not connected to the filter 54.

When the totality of the reflections is considered, in normal operation the transfer function $G(\lambda)$ of the system lying between the input optical fibre 53 and the output optical fibre 55 as shown in Figure 2 will be:

$$G(\lambda) = A^2(\lambda) \sum_{i=0}^{\infty} B^i(\lambda) = A^2(\lambda) \frac{1}{1 - B(\lambda)} \tag{1}$$

It should be noted that this embodiment of the device resolves the problems caused by back reflection for tunable filters which have a $B(\lambda)$ with a value considerably lower than 1 which, according to the preceding formula, provides a transfer function $G(\lambda)$ substantially equal to $A^2(\lambda)$. One type of filter suitable for this purpose is the previously cited Queensgate MF200 filter whose back reflection is ensured at less than -30 dB.

A further embodiment of the present invention which permits a double pass through filters of the type described is shown schematically in Figure 3. In this figure, the same numerical references indicate the components of the same type as those described with reference to the embodiment shown in Figure 2.

This figure shows schematically a channel analyser which comprises an input optical fibre 53 connected to a port 1' of a first electro-optical switch 51', of the type described previously, operated by a driver circuit 52'. One port 501' of the switch 51' is connected to an optical isolator 511 whose output is connected optically to a first port of a tunable filter 54. A second port of the said filter is followed by an optical delay fibre 58 connected through a section of optical fibre 521 to one port 501" of a second electro-optical switch 51", similar to the first 51' and operated by a driver circuit 52". One port 0" of the second switch 51" is optically connected to one port 0' of the first switch 51'. One port 1" of the second switch is optically connected to one output 55 of the device 50 and then to a detecting device 56, of the type described previously, associated with a reading device 57.

To identify the settings of both switches, we shall describe as state 0 the setting which connects the ports 0' and 0" to the corresponding ports 501' and 501", and as state 1 the setting which connects the ports 1' and 1" to the ports 501' and 501" respectively.

Figure 4 shows the variations with time of two waveforms $\varphi_1$ and $\varphi_2$ which represent the control functions applied to the driver circuits 52' and 52" respectively of the electro-optical switches to switch them between the said states 1 and 0.

By way of example, this embodiment uses the same type of filter 54 and photodiode 56 as those described previously for the embodiment shown in Figure 2.

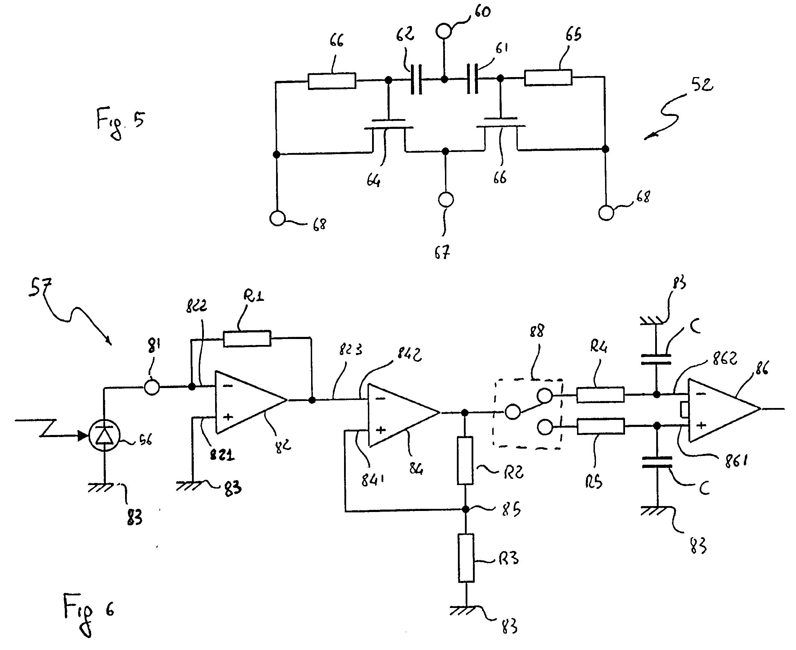

Figure 5 shows a driver suitable for use in the present invention as the driver circuit 52' and 52". The device shown in Figure 5 is a push-pull amplifier with complementary symmetry, for which two enhancement-type MOSFET devices 64 and 66 having opposite polarities, in other words one with an N channel and the other with a P channel, are used, comprising an input port 60, capacitors 61 and 62, resistors 65 and 66, two power supply terminals 68 and an output port identified by a terminal 67.

The MOSFET devices are, for example, RFPN08L types made by Harris. The values of the circuit components 61, 62 and 65, 66 are selected according to the time characteristics of the waveforms $\varphi_1$ and $\varphi_2$ to be generated.

An input voltage having a time variation of the same kind as that of the waveform function $\varphi_1$ and $\varphi_2$ is applied to the input port 60 and amplified by the push-pull circuit shown in Figure 5, which retains its form until the development of a voltage between the terminals 67 and 60 with an amplitude and sign which are such that one of the electro-optical switches 51' or 51" is operated.

In the channel analyser shown in Figure 3, according to the present invention an optical signal sent to the input fibre 53 is transmitted by the switch 51', which is in the state 1, through the isolator 511 to the first port of the tunable filter 54 in which it undergoes a first filtering. The switch 51' is switched to the state 0 (connection between its port 501' and its port 0') after a period $t_1$ in such a way that the signal at the input of the filter 54 is of the pulsed type. This signal pulse passes through the optical delay fibre 58 in a time interval $\tau$. The delay fibre 58 is designed in such a way as to enable the switch 51" to be switched to the state 0 before the signal pulse reaches it. The signal pulse will therefore be sent from the port 501" of the switch 51" to the port 501' of the switch 51' and then to the tunable filter 54 for a second filtering.

After the second filtering and the passage through the delay fibre 58, the signal pulse reaches the switch 51", which is switched to the state 1, and which transmits it to the photodiode 56, and in electrical form to the reading device 57. While the signal pulse is travelling along the delay fibre 58 for the second time, the switch 51" is switched to the state 1. Following this, the switch 51' returns to the state 0 to enable a further optical signal at the input of the fibre 53 to be analysed.

In this embodiment also, the switches, having a switching speed of at least 100 kHz, as mentioned previously, enable a delay fibre with a length of approximately 1 km or less to be used.

For greater clarity, a description will be given below, by way of example and without restriction, of a possible structure of the said reading device 57 which may be associated with both the described embodiments of the channel analyser.

In the configuration shown in Figure 3, the light pulse always passes through the filter 54 in the same direction, and therefore the power reflected by the said filter is sent to the isolator 511 without reaching the photodiode 56. This completely solves the problem caused by back reflection. A possible degradation of the performance of the device shown in Figure 4 may be caused by the non-zero isolation of the two switches 51' and 51", but this effect may be made negligible by suitable selection of the switches.

In greater detail, considering the switch 51' in the state 1 (or 0), $S_{w1}(\lambda)$ indicates the transfer function which describes the transmission of part of the signal between the port 0' (or 1') and the port 501', in other words between the ports for which in an ideal switch there should be no transfer of optical power. Similarly, $S_{w2}(\lambda)$ will indicate the similar transmission function corresponding to the switch 51".

With reference to Figure 4, it is possible to distinguish two time intervals, called the 1st slot and 2nd slot, for the switch 51'.

During the 1st slot, the first time interval shown, starting at the origin, the switch 51' is in state 1; in other words, in ideal operation it permits transmission between the ports 501' and 1'.

During the 2nd slot, corresponding to the interval shown as $t_1$ in the figure, the switch is in state 0; in other words, in ideal operation it permits transmission between the ports 501' and 0'.

The switch 51" is controlled in such a way that it switches between state 0 and state 1 shortly before the end of the first slot, remains in state 1 throughout the second slot and switches again to state 0 immediately after the end of the second slot.

If $S(\lambda)$ denotes the signal at the input of the fibre 53 of the device shown in Figure 3, and $A(\lambda)$ is the transmission function of the filter 54, the signal incident on the photodiode 56 in the two different intervals, the 1st slot and the 2nd slot, will have this form:

$$\text{1st slot } S(\lambda)A(\lambda)\,S_{w2}(\lambda) \tag{2}$$

$$\text{2nd slot } S(\lambda)A(\lambda)\,[A(\lambda) + S_{w1}(\lambda)] \tag{3}$$

To avoid significant degradation of the performance as a result of the double pass, the transmission function $S_{w1}(\lambda)$ must have a level comparable to the codes of the function $A(\lambda)$ of the said filter. In the analysis of the device shown in Figure 3, the attenuation of the switches 51' and 51" has also been taken into account.

For the switch 51', the attenuation coefficients $\alpha_{11}(\lambda)$ and $\alpha_{10}(\lambda)$ relative to the said states 1 and 0 respectively are defined, and the attenuation coefficients $\alpha_{21}(\lambda)$ and $\alpha_{20}(\lambda)$ are defined in a similar way for the switch 51". $\alpha(\lambda)$ indicates the coefficient which includes the attenuation introduced by the fibres used in the device shown in Figure 3 and by the isolator 511. When these coefficients are considered, the relations (2) and (3) shown above relating to the signal incident on the photodiode 56 during the 1st and 2nd slots will become:

$$\text{1st slot } S(\lambda)\alpha(\lambda)\alpha_{11}(\lambda)A(\lambda)S_{w2}(\lambda) \tag{4}$$

$$\text{2nd slot } S(\lambda)A(\lambda)\alpha_{21}(\lambda)\alpha(\lambda)[A(\lambda)\alpha(\lambda)\alpha_{11}(\lambda)\alpha_{20}(\lambda)\alpha_{10}(\lambda)+S_{w1}(\lambda)] \tag{5}$$

The photodiode 56 carries out the conversion of the signal in the two slots from optical to electric, and therefore the last two expressions represent signals proportional to the current produced by the photodiode.

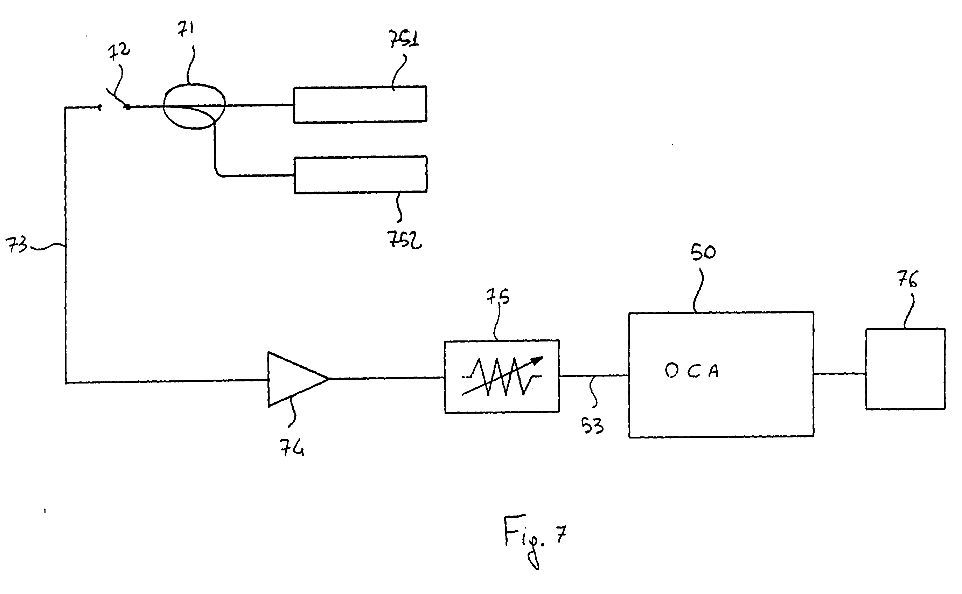

On the basis of these considerations, the reading circuit 57 shown schematically in Figure 6 was produced.

This circuit comprises an input node 81 of a current-voltage conversion stage to which the photodiode 56 is connected. This stage comprises an operational amplifier 82 in the inverting configuration, in which a non-inverting terminal 821 is connected to earth 83 while an inverting terminal 822 is connected to the input node of the first stage, which is also connected to an output 823 of the said operational amplifier through a conducting branch incorporating a resistance R1.

A voltage amplifier stage, comprising a second operational amplifier 84, one inverting terminal 842 of which is connected to the output of the operational amplifier 82, is connected in series with the said current-voltage conversion stage. An output 843 of the operational amplifier 84 is connected to a conducting branch incorporating the resistor R2 and the resistance R3, which is connected to earth 83. The operational amplifier 84 is subject to feedback control by means of a connection between a point 85 lying between the resistors R2 and R3 and the non-inverting terminal 841 of the amplifier. The output of the operational amplifier 84 is followed by a switch 88 capable of connecting the output 843 of the operational amplifier 84 to a resistor R4 of a first integrator or alternatively to a resistor R5 of a second integrator. Each of the first and second integrator stages also comprises a capacitor with a capacitance C disposed downline from the corresponding resistor and connected to earth 83. The difference between the values integrated by the first and second integrators is obtained by means of an operational amplifier 86, which has an inverting terminal 862 connected between the resistor R4 and the capacitor C and a non-inverting terminal 861 connected between the resistor R5 and the capacitor C. This amplifier 86 is capable of amplifying the difference between the signals applied to its terminals, and of rejecting the common mode voltage, as shown in Figure 6.

An example of an operational amplifier 82 is the OPA627 model made by Burr Brown, and a suitable value of the resistor R1 for the purposes of the invention is R1 = 10 M$\Omega$

An example of an operational amplifier 84 is the OPA37 model made by Burr Brown, and suitable values of the resistors R2 and R3 for obtaining the desired voltage amplification are R2 = 10 k$\Omega$; R3 = 100 $\Omega$

The switch 88 is operated by a driver by means of the signal $\Phi_2$, described previously and illustrated in Figure 4. An example of a switch suitable for this purpose is the MAX 4519 made by MAXIM.

For the first and second integrator stages, preferred values of the resistors R4 and R5 and of the capacitor C are: R4 = R5 = 2 k$\Omega$ and C = 100 nF.

The operational amplifier 86 is conveniently an INA102, made by Burr Brown.

The operation of the described circuit is as follows.

A current signal originating from the photodiode 56, both during the first slot and during the second slot, and proportional to the expressions (4) and (5) respectively, is applied to the current-voltage conversion stage, comprising the operational amplifier 82, which converts it into a voltage signal. It is then amplified by the voltage amplifier stage, comprising the operational amplifier 84. The voltage signal corresponding to the first time slot is sent by the switch 88 to the first integrator, comprising the resistor R4 and the capacitor of capacitance C, while the voltage signal corresponding to the second time slot, since the switch is operated by the signal $\Phi_2$, is sent to the second integrator, comprising the resistor R5 and the capacitor C. The integration enables the mean of the signals over the corresponding slots to be found.

Having been integrated in this way, the signal corresponding to the first slot is then sent to an inverting terminal of the operational amplifier 86, while the integrated signal corresponding to the second slot is sent to a non-inverting terminal of the operational amplifier 86. At the output 863 of the latter, there will be present an electrical signal proportional to the integral of the difference between the signals corresponding to the second and first slots, expressed by (4) and (5), in other words, without allowance for gain factors introduced by the amplification of the various stages, to the integral of the quantity

$$S(\lambda)\, A(\lambda)\, \alpha(\lambda)\, [A(\lambda)\, \alpha(\lambda)\, \alpha_{11}(\lambda)\, \alpha_{20}(\lambda)\, \alpha_{10}(\lambda)\, \alpha_{21}(\lambda) + S_{w1}(\lambda)\, \alpha_{21}(\lambda) - S_{w2}(\lambda)\, \alpha_{11}(\lambda)] \tag{6}$$

It should be noted that the subtraction of the integral of the signal of the first slot from the integral of that of the second slot carried out by the described circuit has the further advantage of cancelling out the offsets and the dark current of the photodiode 56.

By tuning the filter for each channel, in other words for each wavelength of the WDM signal, a series of double passes through the filter at the output of the said reading circuit is carried out, providing a mean of all the signals received in each double pass. To detect the channel, the filter must remain tuned to this channel for a period sufficient for the completion of at least one double pass, and therefore a period of at least 10 $\mu$s for the completion of the double pass corresponds to a switching time of the switches corresponding to a switching frequency of at least 10 kHz.

The applicant has carried out experimental tests which have made it possible to evaluate the advantages offered by the solution according to the invention, and which will be described below.

Figure 7 shows the apparatus used for the experimental tests, which comprises the channel analyser 50 in the embodiment shown in Figure 3.

A laser which operates at a wavelength of 1548 nm 751 is connected to a first port of a 3 dB directional coupler 71, a second port of which is connected to a tunable laser 752. A third port of the said coupler 71 is connected to an optical connector 72 capable of making or breaking a connection between the said third port of the coupler 71 to an optical fibre 73. This optical fibre 73 is connected to an input port of an amplifier 74 whose output is optically connected to an input of a variable attenuator 75. An output of the said variable attenuator 75 is connected to the input fibre 53 of the device 50. The output fibre of the device 50 is connected to a scanning optical analyser 76.

The laser 751 is an Anritsu MG9001A; the tunable laser 752 is an HP 8168C; the amplifier 74 is an Ampliphos OP98F produced by the applicant; the directional coupler 71 is the SWBC2105PS210 made by E-TEK; and the variable attenuator 75 is a VA5505-NCL made by JDS. For the device 50, described in detail above with reference to Figure 3, the optical isolator 511 is made by E-TEK; the delay line 58 is a coil approximately 2 km in length, providing a delay $\tau$ of 16.3 $\mu$s.

The filter disposed within the device 50 is a tunable Fabry-Perot filter made by M.O.I., regulated by the application of a voltage varying from 0 to 20 V; its characteristic parameters are:

- free spectral range (FSR) = 86 nm
- half-power bandwidth (FWHM) = 0.173 nm
- introduced attenuation equal to $\alpha_{FP}$ = -2.0 dB.

The waveforms $\Phi_1$ and $\Phi_2$ originate from function generators with wave fronts having a duration of less than one tenth of a nanosecond. The driver devices 52', 52'' described in detail with reference to Figure 5 were constructed in such a way as to amplify the voltages corresponding to the waveforms $\Phi_1$ and $\Phi_2$, in such a way that the durations of the resulting wave fronts are kept at less than 100 ns.

The measured values of the characteristic parameters of the electro-optical switches are as follows, for the switch 51':

- a static loss (in other words the introduced attenuation measured with the switch in a precise state) of 3.8 dB at one port and 4.3 dB at the other;
- a dynamic loss (in other words the introduced attenuation measured immediately after switching) of $\alpha_{10}$ = -4.0 dB in state 0 and $\alpha_{11}$ = -4.5 dB in the state 1;

- static isolation (in other words the attenuation between the input port and the unconnected port of the switch set to one state) 38.3 dB for one port and 37.4 dB for the other port;
- dynamic isolation (in other words the attenuation between the input port and the unconnected port of the switch measured immediately after switching) of $S_{w1}$ = 28 dB for both ports;
- a polarization dependence of less than 0.2 dB;
- while for the switch 51" the following were found, according to the definitions given above:
- a static loss of 5.3 dB for both ports;
- a dynamic loss of $\alpha_{20} = \alpha_{21}$ = 5.5 dB for both states;
- static isolation of approximately 40 dB for both ports;
- dynamic isolation of $S_{w2}(\lambda)$ = 29 dB for both ports;
- a polarization dependence of less than 0.4 dB.

Two experimental tests were carried out. In the first experimental test, the spectrum of a signal transmitted by the device 50 in the case in which there was only one pass through the filter 54 was compared with the spectrum transmitted in the case in which the filtering according to the invention was carried out. For this first experimental test, the device 50 was supplied only with the radiation emitted by the amplifier 74 by amplified spontaneous emission (ASE) (in the amplification band); in other words, the optical connector 72 was kept open, and therefore the two lasers 751 and 752 were disconnected from the rest of the circuit.

To provide a first pass through the filter, the driver device 52" was disconnected from the wave function $\Phi_2$, and therefore the switch 51" was left in state 1, in other words with a connection between its port 501" and its port 1". The waveform $\Phi_1$, which in particular had a peak-to-peak voltage of 10 V, was applied to the driver device 52', while the potential difference between the output terminals of the said driver device for operating the switch 51' was 60 V.

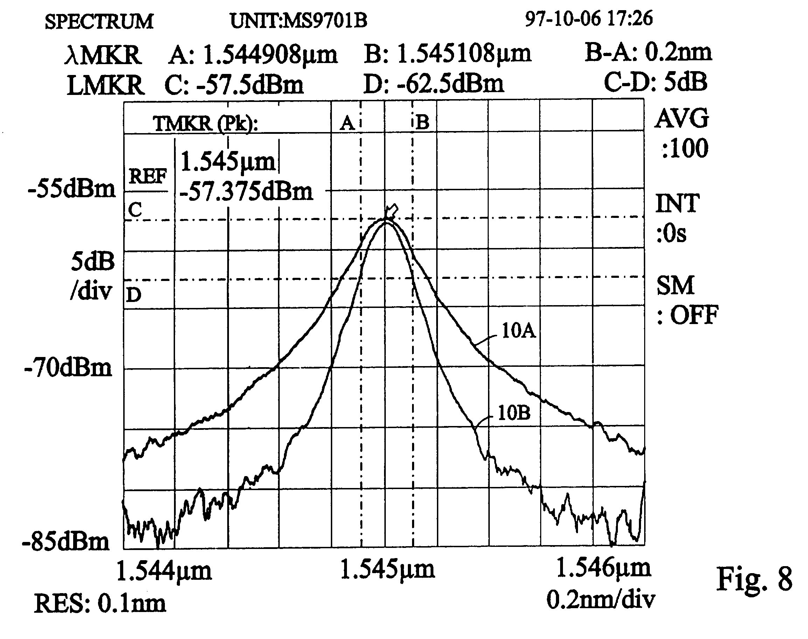

The spectrum of the transmitted signal measured by the optical spectrum analyser 76 is shown in Figure 8, curve 10a.

The spectrum transmitted by the device 50 was then measured with a double pass through the filter 54 provided in the way described in detail in relation to Figures 3, 4 and 5, with peak-to-peak voltages of 10 V for the waveforms $\Phi_1$ and $\Phi_2$ and a potential difference of 60 V for operating the switches.

The spectrum of the transmitted signal measured by the optical spectrum analyser 76 is shown in Figure 8, curve 10b. To permit comparison between the curves 10a and 10b, the peak values of the two spectra were standardized by adjusting the variable attenuator 75 shown in Figure 7.

The applicant notes that, in accordance with the objects of the invention, the curve 10b corresponding to the double pass through the filter is significantly narrower than the curve 10a corresponding to a single pass through the filter. The half-height bandwidth is approximately 0.24 nm for the single pass and approximately 0.18 nm for the double pass. It is also evident that the tail of the spectrum for the double pass 10b is considerably steeper than the tail 10a for the single pass.

In the second experimental test the termination 72 was closed and the device 50 was supplied with radiation emitted by the laser 751 at a wavelength of 1.548 nm and by the variable-wavelength radiation emitted by the laser 752 coupled to the same fibre 73 of the 3 dB directional coupler 71. In this test also, the spectrum transmitted by the device 50 was evaluated both with a single pass of the optical signal through the filter and with a double pass through the filter, as described for the first experimental test.

This second test had the same aim as the first test described, but enabled a greater accuracy to be achieved, since the optical power emitted by the lasers is not uniformly distributed over the whole spectrum, but is concentrated in the two laser lines. Consequently, the measurement was repeated for a plurality of values of the wavelength of the laser 752.

The radiation at $\lambda_1$ = 1.5478 $\mu$m emitted by the laser 751 represents the optical signal which is to be analysed with the optical spectrum analyser 76, while the radiation with variable wavelength $\lambda_2$ produced by the laser 752 simulates a background noise to be filtered. The filter incorporated in the device 50 according to the invention is therefore centred on the emission wavelength of the laser 751.

The spectrum of the signal evaluated by the optical spectrum analyser 76 was then compared with the theoretical values found, for the predetermined wavelengths, by the relation (6) standardized for the resonant wavelength. This relation is:

$$Y(\lambda) = A(\lambda)\left[A(\lambda) + \frac{\alpha_{20}(\lambda)S_{w1}(\lambda)-\alpha_{11}(\lambda)S_{w2}(\lambda)}{\alpha(\lambda)\alpha_{10}(\lambda)\alpha_{11}(\lambda)\alpha_{20}(\lambda)\alpha_{21}(\lambda)}\right] \tag{7}$$

where $Y(\lambda)$ denotes the transmission function of the device 50 as a whole with A.

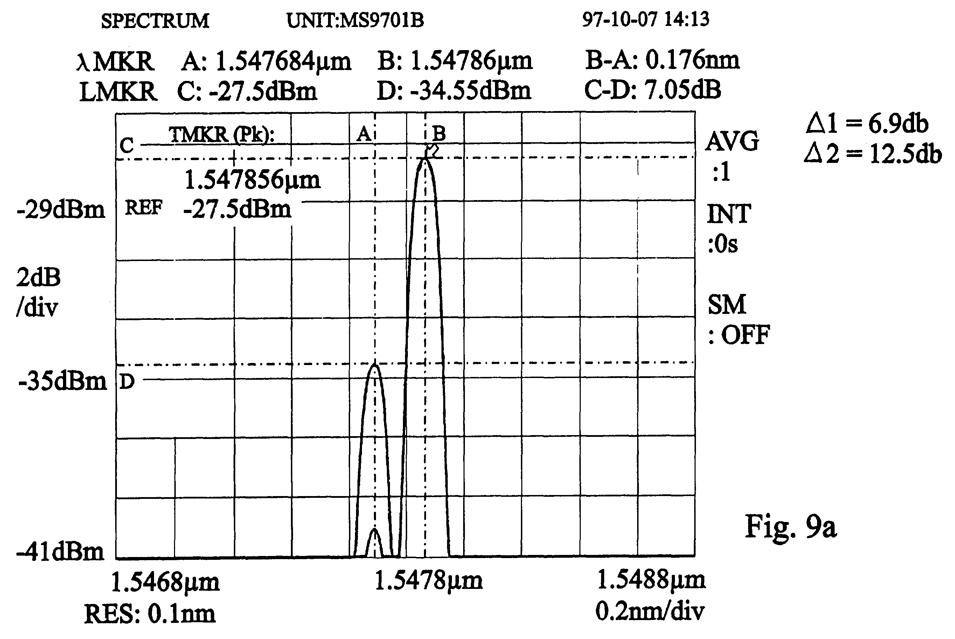

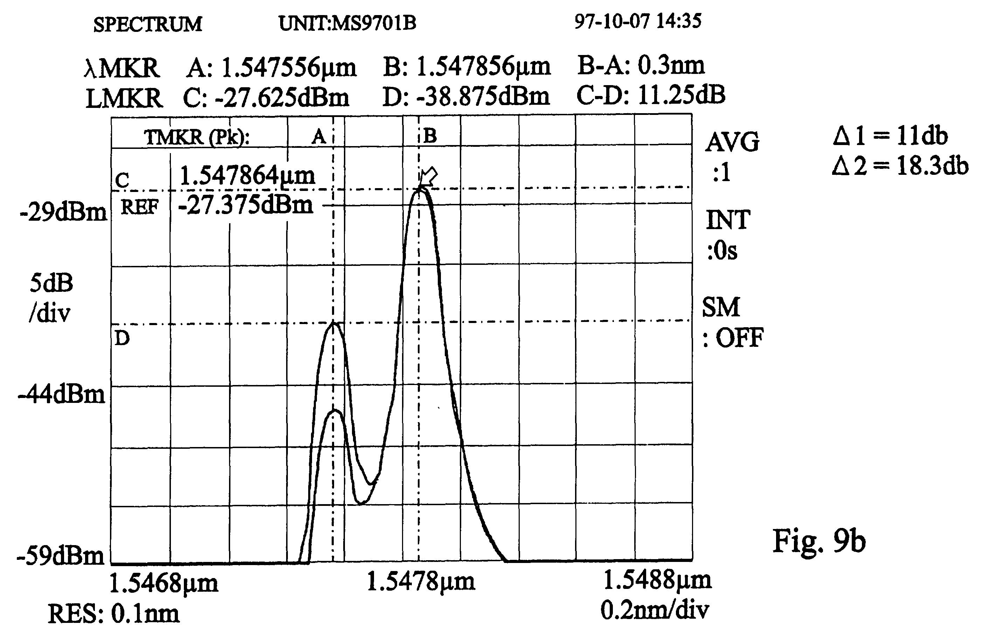

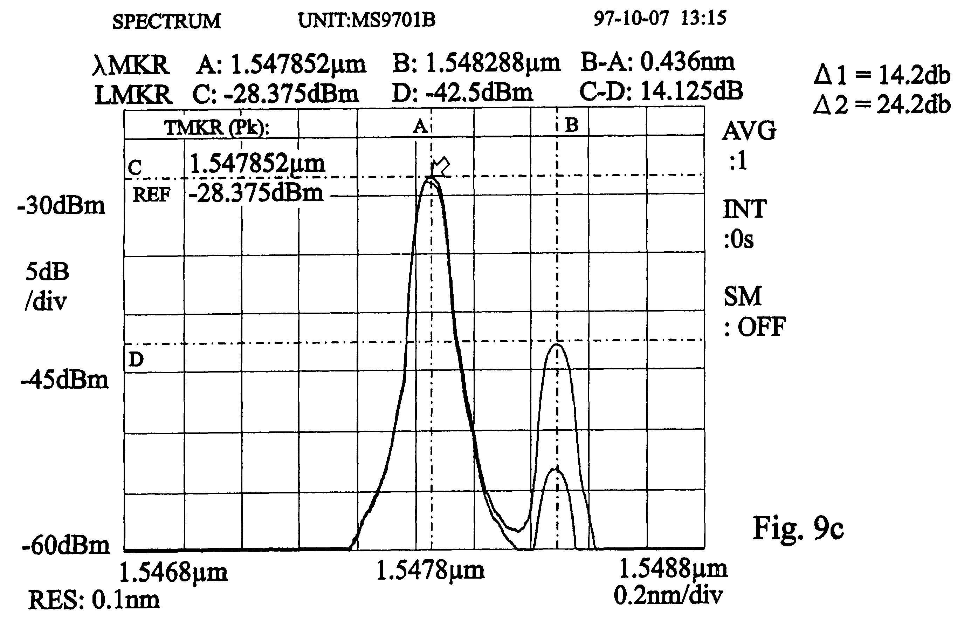

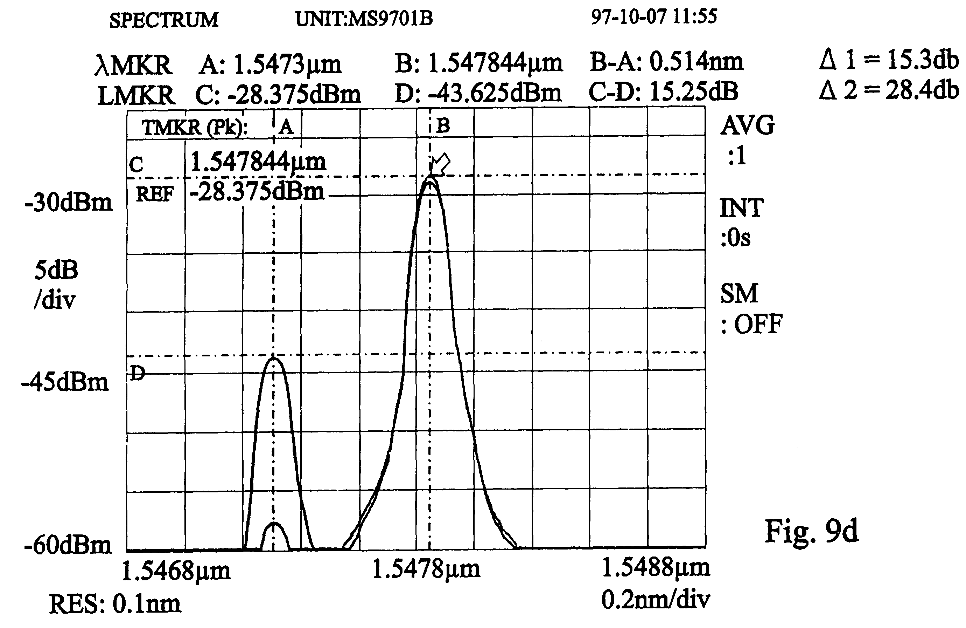

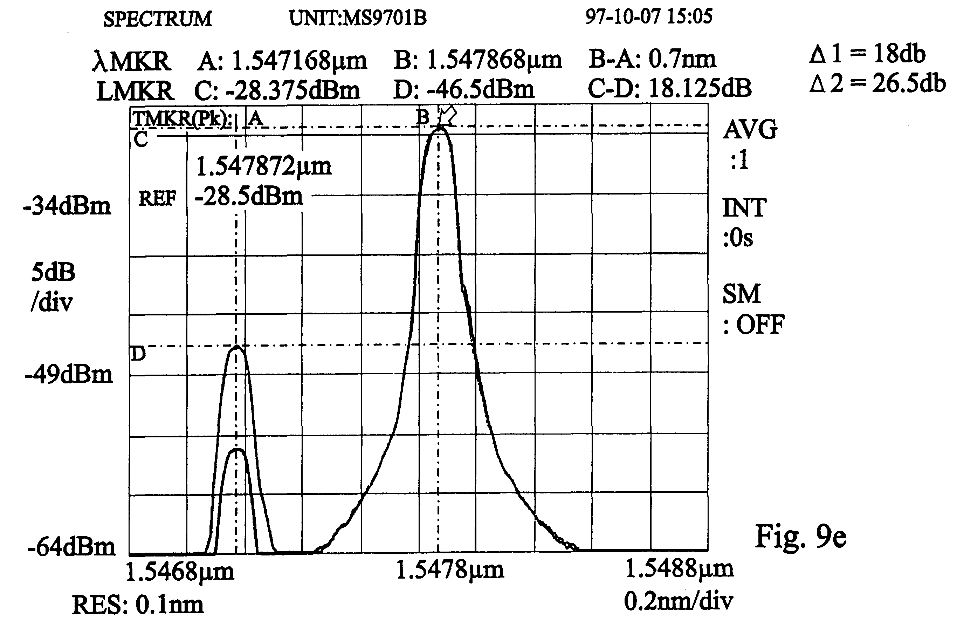

Figures 9a-9e show the spectra in decibels measured for five values of the emission wavelength of the laser 752 in the case of the single pass and of the filtering according to the invention.

The applicant observes that the peaks of the electromagnetic radiation corresponding to the wavelengths for the laser 752, which simulate a background noise, are considerably lower in the case in which the filtering takes place by the methods of operation of the device 50, the lower curves in each of Figures 9a-9e, according to the invention, than those corresponding to a single pass through the filter, the upper curves in Figures 9a-9e.

For further clarification, a table is provided in which, for each value $\lambda_2$ of the radiation emitted by the laser 752 during the experiment described above (the difference $\Delta\lambda = \lambda_1 - \lambda_2$ is shown), the theoretical value (from relation (11)) and the experimental value of the contrast factor are shown for filtering carried out with a single pass and for filtering according to the invention. The contrast factor is given by:

$$\Delta_1 = [A(\lambda_1)]_{dB} - [A(\lambda_2)]_{dB} \qquad \text{for the single pass;}$$

$$\Delta_2 = [Y(\lambda_1)]_{dB} - [Y(\lambda_2)]_{dB} \qquad \text{for the filtering according to the invention;}$$

| $\Delta\lambda$ (nm) | Single pass Experimental value $\Delta_1$ | Double pass Experimental value $\Delta_2$ | Single pass Theoretical value $\Delta_1$ | Double pass Theoretical value $\Delta_2$ |
|---|---|---|---|---|
| -0.176 | 6.9 | 12.5 | 7.1 | 12.1 |
| -0.300 | 11 | 18.3 | 11.1 | 18.1 |
| +0.436 | 14.2 | 24.2 | 14.2 | 22.1 |
| -0.544 | 15.3 | 28.4 | 16.1 | 24.3 |
| -0.700 | 18 | 26.5 | 18.2 | 26.7 |

The contrast factor $\Delta_2$ corresponding to filtering with the device 50 is considerably higher than that for a single pass $\Delta_1$, in accordance with the objects of the invention and with the theoretical analysis which has been described. The small differences found between theory and experiment are presumably due to the difficulty of keeping the filter locked on $\lambda_1$.

**Claims**

1.   Optical telecommunications system, comprising:

- at least one transmission station, comprising a generator (1A, 1B) of transmission signals at a minimum of two predetermined wavelengths, and a wavelength division multiplexer (3A, 3B) for sending the said transmission signals along an optical fibre line;
- at least one station for receiving the said transmission signals;
- the said optical fibre line connecting the said transmission and receiving stations;
- a station (6A, 6B) for amplifying the optical signal, disposed along the said line;
- a control unit (18) associated with the said line station,
  characterized in that it has an optical channel analyser (50) disposed down-stream from the said amplifying station and connected to the said control unit (18).

2.   System according to Claim 1, characterized in that the said channel analyser comprises:

- a device (108) for extracting part of the optical signal from the line at an input optical fibre (53);
- at least one selective filter (54) tunable to the wavelengths of the channels which contain the signals;
- a circuit capable of causing at least a double pass of the optical signal through the said filter;
- a device (56) for detecting the filtered optical signal;
- a circuit (57) for reading the electrical signal originating from the said detecting device.

3.   System according to Claim 2, characterized in that the said circuit capable of causing at least a double pass of the optical signal through the said filter comprises:

- a switch (51), operated by a driver circuit (52), which comprises a first port (501), connected to the input of the said filter (54), connected selectively to one of two second ports (1) or (0), one of which is connected to the said input fibre (53) while the other is connected to the said detecting device (56);
- at least one delay fibre (58) disposed at the output of the said filter (54);
- a device (59) for reflecting the optical beam emerging from the said delay fibre.

4. System according to Claim 2, characterized in that the said circuit capable of causing at least a double pass of the optical signal through the said filter comprises:

- a first switch (51'), operated by a driver circuit (52'), which comprises a first port (501'), connected selectively to one of two second ports (1') or (0');
- a second switch (51"), operated by a driver circuit (52"), which comprises a first port (501"), connected selectively to one of two second ports (1") or (0");
- an isolator (511) disposed between said first port (501') of the first switch and the said filter (54);
- at least one delay fibre (58) disposed at the output of the said filter (54);
- one of the said second ports (0') or (1') of the first switch (51') being connected to the said input fibre (53) while the other is connected to one of the two second ports (0") of the second switch (51");
- the said first port (501") of the second switch being connected to the said optical delay fibre (58);
- the said second port (1") of the second switch (51") being connected to the said detecting device (56).

5. System according to the preceding claims, characterized in that the said detecting device (56) is a photodiode.

6. System according to any of the preceding claims, characterized in that the said circuit (57) for reading the electrical signal originating from the detecting device (56) comprises a first amplification and current-voltage conversion stage, connected in series with a second voltage amplification stage, connected in series with a first port of a switch (88) which is connected selectively to one of two second ports, each of which is connected to one input of a circuit that integrates the difference between the said two inputs.

7. Channel analyser for wavelength division multiplexed transmission signals, comprising:

- an input (53) for the said wavelength division multiplexed signal;
- at least one selective filter (54) tunable to the wavelengths of the channels which contain the signals;
- an optical circuit capable of causing at least one double pass of the optical signal through the said filter;
- a device (56) for detecting the filtered optical signal,
  characterized in that the said optical circuit comprises at least one optical switch and a delay fibre (58) associated with the said at least one switch.

8. Device according to Claim 7, characterized in that the said optical circuit capable of causing at least a double pass of the optical signal through the said filter comprises:

- a switch (51), operated by a driver circuit (52), which comprises a first port (501), connected to the input of the said filter (54), connected selectively to one of two second ports (1) or (0), one of which is connected to the said input fibre (53) while the other is connected to the said detecting device (56);
- at least one delay fibre (58) disposed at the output of the said filter (54);
- a device (59) for reflecting the optical beam emerging from the said delay fibre.

9. Device according to Claim 7, characterized in that the said optical circuit capable of causing at least a double pass of the optical signal through the said filter comprises:

- a first switch (51'), operated by a driver circuit (52'), which comprises a first port (501'), connected selectively to one of two second ports (1') or (0');
- a second switch (51"), operated by a driver circuit (52"), which comprises a first port (501"), connected selectively to one of two second ports (1") or (0");
- an isolator (511) disposed between the said first port (501') of the first switch and the said filter (54);
- at least one delay fibre (58) disposed at the output of the said filter (54);
- one of the said second ports (0') or (1') of the first switch (51') being connected to the said input fibre (53) and the other being connected to one of the two second ports (0") of the second switch (51");
- the said first port (501") of the second switch being connected to the said optical delay fibre (58);

- the said second port (1") of the second switch (51") being connected to the said detecting device (56).

10. Device according to Claims 7 to 9, characterized in that the said detecting device (56) is a photodiode.

11. Device according to Claims 7 to 10, characterized in that the said circuit (57) for reading the electrical signal originating from the detecting device (56) comprises a first amplification and current-voltage conversion stage, connected in series with a second voltage amplification stage, connected in series with a first port of a switch (88) which is connected selectively to one of two second ports, each of which is connected to one input of a circuit that integrates the difference between the said two inputs.

12. Method for filtering an optical signal in a waveband, characterized in that it comprises the following stages:

- extracting a time sample of the said signal;
- filtering the said time sample of the signal for a first time by means of a filter;
- filtering the signal for a second time by means of the same filter;
- converting the said doubly filtered optical signal into a corresponding electrical signal.

13. Method for monitoring channels for wavelength division multiplexed transmission signals, characterized in that it comprises the following stages:

- extracting from a line containing multiple-wavelength signals a time sample of the said signal;
- filtering the said time sample of the signal for a first time by means of a tunable filter;
- filtering the signal for a second time by means of the same filter;
- converting the said doubly filtered optical signal into a corresponding electrical signal;
- sending this electrical signal to a terminal for monitoring the parameters of the line.

14. Method for monitoring channels for wavelength division multiplexed transmission signals, according to claim 13, characterized in that it additionally comprises the stage of tuning the said filter to a different spectral region.

15. Optical amplifier with gain control, comprising:

- at least one active fibre doped with a rare earth and capable of generating a light emission of a multiple-wavelength transmission signal in response to light supplied at a pumping wavelength;
- at least one pumping source of the said active fibre at the said pumping wavelength;
- a coupling device for sending the said light supply and the said transmission signal along the active fibre, characterized in that it comprises an optical channel analyser (50), disposed at the output of the said active fibre, communicating the information on the detected optical channels to a control unit (18) which regulates the gain of the amplifier.

16. Optical amplifier with gain control according to Claim 14, characterized in that the said control unit controls and regulates the power of the said pumping source.

17. Optical amplifier with gain control according to Claim 14, characterized in that the said control unit controls a variable attenuator disposed at the output of an amplification stage.

Fig. 1

Fig. 2

Fig. 3

Fig. 4

EP 0 964 535 A1

EP 0 964 535 A1

Fig. 5

Fig. 6

Fig. 7

SPECTRUM UNIT:MS9701B 97-10-06 17:26

λMKR A: 1.544908μm B: 1.545108μm B-A: 0.2nm
LMKR C: -57.5dBm D: -62.5dBm C-D: 5dB

TMKR (Pk):
1.545μm
-57.375dBm

REF
C
D

-55dBm

5dB
/div

-70dBm

-85dBm

1.544μm 1.545μm 1.546μm
RES: 0.1nm 0.2nm/div

A B

AVG
:100

INT
:0s

SM
: OFF

10A

10B

Fig. 8

SPECTRUM　　　　UNIT:MS9701B　　　　　97-10-07 14:13

λMKR　　A: 1.547684µm　　B: 1.54786µm　　B-A: 0.176nm
LMKR　C: -27.5dBm　　　　D: -34.55dBm　　C-D: 7.05dB

$\triangle 1 = 6.9db$
$\triangle 2 = 12.5db$

Fig. 9a

EP 0 964 535 A1

SPECTRUM          UNIT:MS9701B                    97-10-07 14:35

λMKR   A: 1.547556μm    B: 1.547856μm    B-A: 0.3nm
LMKR   C: -27.625dBm    D: -38.875dBm    C-D: 11.25dB

Δ1 = 11db
Δ2 = 18.3db

TMKR (Pk):         A        B        AVG
C        1.547864μm              :1
REF      -27.375dBm             INT
-29dBm                           :0s
5dB
/div                            SM
D                               : OFF
-44dBm

-59dBm
1.5468μm          1.5478μm          1.5488μm
RES: 0.1nm                         0.2nm/div

Fig. 9b

Fig. 9c

SPECTRUM UNIT:MS9701B 97-10-07 11:55

λMKR A: 1.5473μm B: 1.547844μm B-A: 0.514nm Δ1 = 15.3db
LMKR C: -28.375dBm D: -43.625dBm C-D: 15.25dB Δ2 = 28.4db

TMKR (Pk): A B AVG
:1
C 1.547844μm
REF -28.375dBm INT
:0s
SM
: OFF

-30dBm

5dB
/div

-45dBm D

-60dBm
1.5468μm 1.5478μm 1.5488μm
RES: 0.1nm 0.2nm/div

Fig. 9d

λMKR   A: 1.547168μm   B: 1.547868μm   B-A: 0.7nm     Δ1 = 18db
LMKR   C: -28.375dBm   D: -46.5dBm     C-D: 18.125dB   Δ2 = 26.5db

TMKR(Pk): | A                    B

C ─────────────────────────────────── AVG
                                        :1
        1.547872μm
REF     -28.5dBm                       INT
-34dBm                                 :0s

5dB
/div                                   SM
                                       : OFF
D
-49dBm

-64dBm
1.5468μm              1.5478μm              1.5488μm

RES: 0.1nm                            0.2nm/div

Fig. 9e

EP 0 964 535 A1

EP 0 964 535 A1

| | European Patent Office | EUROPEAN SEARCH REPORT | Application Number EP 99 11 0163 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 762 672 A (ALCATEL NV) 12 March 1997 (1997-03-12) * abstract * | 1,5,15, 17 | H04B10/08 |
| Y | * column 2, line 15 - column 3, line 10 * * column 4, line 12 - line 27 * * column 4, line 56 - line 57 * | 2,12-14 | |
| A | * figure 1 * | 7,10 | |
| X | EP 0 732 786 A (NIPPON ELECTRIC CO) 18 September 1996 (1996-09-18) * abstract * * column 3, line 23 - line 47 * | 1,5,15, 16 | |
| A | * figure 3 * | 10 | |
| Y | CULVERHOUSE D O ET AL: "LOW-LOSS ALL-FIBER ACOUSTO-OPTIC TUNABLE FILTER" OPTICS LETTERS, vol. 22, no. 2, 15 January 1997 (1997-01-15), pages 96-98, XP000679187 * abstract * * page 96, left-hand column, line 1 - line 5 * * page 96, left-hand column, line 41 - line 44 * | 2,12-14 | |
| A | * figure 4 * | 3,4,7-9 | |
| A | US 5 481 402 A (CHENG YIHAO ET AL) 2 January 1996 (1996-01-02) * abstract * * column 3, line 44 - line 50 * * figure 2 * | 2-4,7-9, 12-14 | |

TECHNICAL FIELDS SEARCHED (Int.Cl.6)

H04J
H04B

The present search report has been drawn up for all claims

| Place of search | Date of completion of the search | Examiner |
|---|---|---|
| THE HAGUE | 24 September 1999 | Ribbe, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

## ANNEX TO THE EUROPEAN SEARCH REPORT
## ON EUROPEAN PATENT APPLICATION NO.

EP 99 11 0163

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-1999

| Patent document cited in search report | | Publication date | Patent family member(s) | | Publication date |
|---|---|---|---|---|---|
| EP 0762672 | A | 12-03-1997 | FR<br>CA<br>JP | 2738697 A<br>2185039 A<br>9130333 A | 14-03-1997<br>09-03-1997<br>16-05-1997 |
| EP 0732786 | A | 18-09-1996 | JP<br>JP<br>US | 2723067 B<br>8248457 A<br>5644423 A | 09-03-1998<br>27-09-1996<br>01-07-1997 |
| US 5481402 | A | 02-01-1996 | NONE | | |

EPO FORM P0459

For more details about this annex : see Official Journal of the European Patent Office, No. 12/82